# EUROPEAN PATENT SPECIFICATION

(11) **EP 2 617 297 B1**
(45) Date of publication and mention of the grant of the patent: **24.12.2014**
(21) Application number: 13151312.9
(22) Date of filing: 15.01.2013
(51) Int. Cl.: A23L 1/39, A23L 1/24

(54) **Food sauce**
Würzsauce
Sauce alimentaire

(30) Priority: 19.01.2012 IT TV20120009
(43) Date of publication of application: 24.07.2013
(73) Proprietor: Cigierre - Compagnia Generale Ristorazione S.P.A., 33035 Martignacco - Frazione Torreneano UD (IT)
(72) Inventor: Di Giusto, Marco, 33100 Udine (IT)
(74) Representative: Modiano, Micaela Nadia

(56) References cited:
- US-A1- 2007 196 555
- US-A1- 2011 268 862
- Rita: "Smokey Tartar Sauce", food.com , 3 May 2005 (2005-05-03), XP002683465, Retrieved from the Internet: URL:http://www.food.com/recipeprint.do?rid =120370 [retrieved on 2012-09-14]

## Description

The present invention relates to a food sauce.

The use is known of sauces, such as mayonnaise or ketchup, as seasonings for foods; in particular such sauces are in high demand in the industrial and catering sectors for seasoning foods such as meats, vegetables and bread products.

For example, on the web (www.food.com the recipe of a "Smokey Tartar Sauce" is disclosed. This sauce consists of the following ingredients: mayonnaise (approximately 52.18 wt%), ketchup (approximately 7.77 wt%), chilli pepper (approximately 1.25 wt%), parsley (approximately 1.43 wt%), Worcester sauce (approximately 3.75 wt%), grain mustard (approximately 6.95 wt%), lemon juice (approximately 3.54 wt%), scallions (approximately 6.31 wt%), celery (approximately 13.76 wt%), garlic (approximately 2.29 wt %), paprika (approximately 0.63 wt%) and black pepper (approximately 0.14 wt%).

The addition of such sauces brings out the taste and flavor of the foods thus seasoned.

Demand is therefore high for new sauces that can better bring out the flavor of foods.

An aim of the present invention is to provide a food sauce that advantageously enhances and brings out the flavor of foods such as for example meats, vegetables and bread products.

This aim and other objects are achieved by a food sauce according to the present invention which is characterized in that it is constituted by the following ingredients (percentages expressed in % weight):

| | |
|---|---|
| mayonnaise-type sauce: | 74.17% - 76.76%; |
| ketchup-type sauce: | 21.49% - 22.24%; |
| chilli pepper: | 0.87% - 4.21%; |
| parsley: | 0.08% - 0.09%; and |
| Worcester-type sauce: | 0.04%; |

wherein said chilli pepper has a piquancy on the Scoville scale comprised in the range of 2,500-5,000 SHU.

For the present invention, the term "mayonnaise-type sauce" is used to mean the commonly known sauce in cuisine.

Such mayonnaise-type sauce is a creamy and homogeneous sauce, white or pale yellow in color, constituted generally by a stable emulsion of vegetable oil fractionated in water, with egg yolk as an emulsifier and flavored with mustard and vinegar or lemon juice (adjuvants for the emulsion).

For the present invention, the term "ketchup-type sauce" is used to mean the commonly known sauce in cuisine.

Generally, such ketchup-type sauce is a product based on tomato, vinegar, sugar, onions, spices and additives.

Such ketchup-type sauce is usually sold by the Heinz company.

For the present invention, the term "Worcester-type sauce (or Worcestershire sauce)" is used to mean the commonly known sauce in cuisine.

Such Worcester-type sauce is an English sauce, sweet-and-sour and lightly piquant, which is named after the English city of Worcester.

It is mainly constituted by onion, garlic, anchovies and spices; it is dark brown in color, and it is particularly adapted for seasoning meats, gravies and soups; moreover, it is is essential for the preparation of some cocktails (such as the well-known Bloody Mary).

Such Worcester-type sauce is usually sold by the English company Lea & Perrins Inc.

Such Worcester-type sauce is constituted by the following ingredients: (barley) malt vinegar, vinegar made from alcohol, treacle, sugar, salt, anchovies, extract of tamarind, onions, garlic, spices, flavorings.

For the present invention, the term "piquancy" is used to indicate the quantity of substances known as capsaicinoids (the most common is capsaicin) which are present in chilli peppers.

Such piquancy is measured on the Scoville Scale.

The number of Scoville units that indicates the position on the scale (SHU) indicates the equivalent capsaicin quantity contained.

For example, pure capsaicin has a Scoville rating comprised in the range of 15,000,000 - 16,000,000 SHU, whereas peppers of the Allspice or Sweet Bell Pepper types have a Scoville rating comprised in the range of 0 -100 SHU.

It is known that the piquancy of many piquant sauces sold and in use is indicated in Scoville units.

For the present invention, the term "Chipotle (or Chilpotle)" is used to mean a type of smoked chilli pepper that is generally used in Mexican cuisine.

Such chipotle chilli pepper has a piquancy comprised in the range of 2,500 - 5,000 SHU.

According to the present invention a food sauce has surprisingly been found which is characterized in that such food sauce is constituted by the following ingredients (percentages expressed in %/weight):

| | |
|---|---|
| mayonnaise-type sauce: | 74.17% - 76.76%; |
| ketchup-type sauce: | 21.49% - 22.24%; |
| chilli pepper: | 0.87% - 4.21%; |
| parsley: | 0.08% - 0.09%; and |
| Worcester-type sauce: | 0.04%; |

wherein said chilli pepper has a piquancy on the Scoville scale comprised in the range of 2,500 - 5,000 SHU.

The food sauce of the present invention advantageously enhances and brings out the flavor of foods such as meats, vegetables and bread products.

Preferably, such mayonnaise-type sauce is constituted by the following ingredients (percentages expressed in %/weight):

| | |
|---|---|
| seed oil: | 78.1 % ; |
| yolks: | 17.2%; |
| lemon juice: | 2.5% ; |
| mustard: | 0.6% ; |
| pepper: | 0.3%; |
| white vinegar: | 0.6% ; and |
| salt: | 0.6%. |

Preferably, such chilli pepper is of the Chipotle type.

Preferably, such ketchup-type sauce is produced by the American company Heinz.

Preferably, such Worcester-type sauce is produced by the English company Lea & Perrins Inc.

In a preferred embodiment, the food sauce in the present invention is thus constituted by (percentages expressed in %/weight):

| | |
|---|---|
| mayonnaise-type sauce: | 75.60%; |
| ketchup-type sauce: | 21.91 %; |
| chipotle: | 2.36%; |
| parsley: | 0.09%; and |
| Worcester-type sauce: | 0.04%. |

In another preferred embodiment, the food sauce in the present invention is thus constituted by (percentages expressed in %/weight):

| | |
|---|---|
| mayonnaise-type sauce: | 76.76%; |
| ketchup-type sauce: | 22.24%; |
| chipotle: | 0.87%; |
| parsley: | 0.09%; and |
| Worcester-type sauce: | 0.04%. |

In this embodiment, the food sauce of the present invention has a lower piquancy than in the previous embodiment and is particularly indicated for seasoning with a low degree of piquancy.

From the foregoing, it ensues that, simply by varying the quantity of chilpotle in the formulation of the food sauce of the present invention one can advantageously modulate the piquancy of such sauce and therefore obtain sauces that are more or less piquant and are suitable for different types of foods.

In all cases, the food sauce of the present invention surprisingly enhances the flavor of foods seasoned with such sauce.

The food sauce of the present invention is obtained firstly by combining the mayonnaise-type sauce with the ketchup-type sauce and, after mixing these ingredients, for example with a whisk, adding the other ingredients and blending them together for a few minutes.

The food sauce thus obtained must conveniently be kept at a temperature comprised in the range between 3-5°C, preferably at 4°C.

The food sauce of the present invention is particularly suitable for enhancing the flavors of foods such as meats, vegetables and bread products.

### EXAMPLES

Below some examples of embodiments of the food sauce of the present invention are shown.

### Food sauce with medium piquancy

| | g | %/weight |
|---|---|---|
| mayonnaise | 17.6 | 75.60% |
| ketchup | 5.1 | 21.91 % |
| chipotle | 0.55 | 2.36% |
| parsley | 0.02 | 0.09% |
| Worcester | 0.01 | 0.04% |
| total | 23.28 | 100.00% |

### Food sauce with low piquancy

| | g | %/weight |
|---|---|---|
| mayonnaise | 17.6 | 76.76 |
| ketchup | 5.1 | 22.24% |
| chipotle | 0.2 | 0.87% |
| parsley | 0.02 | 0.09% |
| Worcester | 0.01 | 0.04% |
| total | 23.28 | 100% |

## Claims

1. A food sauce, **characterized in that** said food sauce is constituted by the following ingredients expressed in percentage by weight:
| | |
|---|---|
| mayonnaise-type sauce: | 74.17% - 76.76%; |
| ketchup-type sauce: | 21.49% - 22.24%; |
| chilli pepper: | 0.87% - 4.21%; |
| parsley: | 0.08% - 0.09%; and |
| Worcester-type sauce: | 0.04%; |
wherein said chilli pepper has a piquancy on the Scoville scale comprised in the range of 2,500-5,000 SHU.

2. The food sauce according to claim 1, wherein said mayonnaise sauce is constituted by the following ingredients expressed in percentage by weight:
| | |
|---|---|
| seed oil: | 78.1 %; |
| yolks: | 17.2%; |
| lemon juice: | 2.5%; |
| mustard: | 0.6% ; |
| pepper: | 0.3%; |
| white vinegar: | 0.6% ; and |
| salt: | 0.6%. |

3. The food sauce according to one or more of the preceding claims, wherein said chilli pepper is of the Chipotle type.

4. The food sauce according to one or more of the preceding claims, wherein said food sauce is constituted by the following ingredients expressed in percentage by weight:
| | |
|---|---|
| mayonnaise-type sauce: | 75.60%; |
| ketchup-type sauce: | 21.91%; |
| chipotle: | 2.36%; |
| parsley: | 0.09%; and |
| Worcester-type sauce: | 0.04%. |

5. The food sauce according to one of claims 1-3, wherein said food sauce is constituted by the following ingredients expressed in percentage by weight:
| | |
|---|---|
| mayonnaise-type sauce: | 76.76%; |
| ketchup-type sauce: | 22.24%; |
| chipotle: | 0.87%; |
| parsley: | 0.09%; and |
| Worcester-type sauce: | 0.04%. |

6. Use of the food sauce according to one or more of the preceding claims to season foods such as meats, vegetables and bread products.

## Patentansprüche

1. Eine Würzsauce, **dadurch gekennzeichnet, dass** die Würzsauce aus folgenden Zutaten besteht, ausgedrückt in Gewichtsprozent;
| | |
|---|---|
| Sauce vom Mayonnaise-Typ: | 74,17%-76,76%; |
| Sauce vom Ketchup-Typ: | 21,49%-22,24%; |
| Chilipfeffer: | 0,87%-4,21%; |
| Petersilie: | 0,08%-0,09%; und |
| Worcester-Typ Sauce: | 0,04%; |
wobei der Chilipfeffer eine Pikantheit auf der Scoville-skala hat, die im Bereich von 2.500-5.000 SHU liegt.

2. Die Würzsauce gemäß Anspruch 1, worin die Mayonnaisesauce aus den folgenden Zutaten besteht, ausgedrückt in Gewichtsprozent:
| | |
|---|---|
| Samenöl: | 78,1%; |
| Eigelb: | 17,2%; |
| Zitronensaft: | 2,5%; |
| Senf: | 0,6%; |
| Pfeffer: | 0,3%; |
| heller Essig: | 0,6%; und |
| Salz: | 0,6%. |

3. Die Würzsauce gemäß einem oder mehreren der obigen Ansprüche, worin der Chilipfeffer vom Chipotle-Typ ist.

4. Die Würzsauce gemäß einem oder mehreren der obigen Ansprüche, worin die Würzsauce aus folgenden Zutaten besteht, ausgedrückt in Gewichtsprozent:
| | |
|---|---|
| Sauce vom Mayonnaise-Typ: | 75,60%; |
| Sauce vom Ketchup-Typ: | 21,91%; |
| Chipotle: | 2,36%; |
| Petersilie: | 0,09%; und |
| Worcester-Typ Sauce: | 0,04%. |

5. Die Würzsauce gemäß einem der Ansprüche 1-3, wobei die Würzsauce aus folgenden Zutaten besteht, ausgedrückt in Gewichtsprozent:
| | |
|---|---|
| Sauce vom Mayonnaise-Typ: | 76,76%; |
| Sauce vom Ketchup-Typ: | 22,24%; |
| Chipotle: | 0,87%; |
| Petersilie: | 0,09%; und |
| Worcester-Typ Sauce: | 0,04%. |

6. Verwendung der Würzsauce gemäß einem oder mehreren der obigen Ansprüche, um Lebensmittel wie zum Beispiel Fleisch, Gemüse und Brotprodukte, zu würzen.

## Revendications

1. Sauce alimentaire, **caractérisée en ce que** ladite sauce alimentaire est constituée par les ingrédients suivants exprimés en pourcentage en poids :
| | |
|---|---|
| sauce de type mayonnaise : | 74,17 % - 76,76 % ; |
| sauce de type ketchup : | 21,49 % - 22,24 % ; |
| piment rouge : | 0,87 % - 4,21 % ; |
| persil : | 0,08 % - 0,09 % ; et |
| sauce de type Worcester : | 0,04 % ; |
dans lequel ledit piment rouge a un piquant sur l'échelle de Scoville compris dans la plage de 2500 à 5000 SHU.

2. Sauce alimentaire selon la revendication 1, dans laquelle ladite sauce mayonnaise est constituée par les ingrédients suivants exprimés en pourcentage en poids :
| | |
|---|---|
| huile de graines : | 78,1 % |
| jaunes d'oeuf : | 17,2 % ; |
| jus de citron : | 2,5 % ; |
| moutarde : | 0,6 % ; |
| poivre : | 0,3 % ; |
| vinaigre blanc : | 0,6 % ; et |
| sel : | 0,6 %. |

3. Sauce alimentaire selon une ou plusieurs des revendications précédentes, dans laquelle ledit piment rouge est du type Chipotle.

4. Sauce alimentaire selon une ou plusieurs des revendications précédentes, dans laquelle ladite sauce alimentaire est constituée par les ingrédients suivants exprimés en pourcentage en poids :
| | |
|---|---|
| sauce de type mayonnaise : | 75,60 % ; |
| sauce de type ketchup : | 21,91 % ; |
| chipotle : | 2,36 % ; |
| persil : | 0,09 % ; et |
| sauce de type Worcester : | 0,04 %. |

5. Sauce alimentaire selon l'une des revendications 1 à 3, dans laquelle ladite sauce alimentaire est constituée par les ingrédients suivants exprimés en pourcentage en poids :
| | |
|---|---|
| sauce de type mayonnaise ; | 76,76 % ; |
| sauce de type ketchup : | 22,24 % ; |
| chipotle : | 0,87 % ; |
| persil : | 0,09 % ; et |
| sauce de type Worcester : | 0,04 %. |

6. Utilisation de la sauce alimentaire selon une ou plusieurs des revendications précédentes pour assaisonner des aliments tels que des viandes, des légumes et des produits de panification.
